# EUROPÄISCHE PATENTSCHRIFT

(11) **EP 2 564 584 B1**
(45) Veröffentlichungstag und Bekanntmachung des Hinweises auf die Patenterteilung: **14.01.2015**
(21) Anmeldenummer: 11716884.9
(22) Anmeldetag: 21.04.2011
(51) Int. Cl.: H04M 3/22, H04M 15/00

(54) **ANORDNUNG ZUM PROTOKOLLIEREN VON BENUTZUNGSVORGÄNGEN**
ARRANGEMENT FOR LOGGING USE PROCESSES
SYSTÈME POUR ÉTABLIR UN PROTOCOLE DE PROCESSUS D'UTILISATION

(30) Priorität: 26.04.2010 DE 102010028208
(43) Veröffentlichungstag der Anmeldung: 06.03.2013
(73) Patentinhaber: Aurenz GmbH, 73230 Kirchheim unter Teck (DE)
(72) Erfinder: AURENZ, Hans-Peter, 72622 Nürtingen (DE)
(74) Vertreter: Patentanwälte Ruff, Wilhelm, Beier, Dauster & Partner
(86) Internationale Anmeldenummer: PCT/EP2011/056406
(87) Internationale Veröffentlichungsnummer: WO 2011/134882

(56) Entgegenhaltungen:
- EP-A2- 1 531 608
- DE-A1-102006 038 372
- JP-A- 11 088 505

## Beschreibung

Die Erfindung betrifft eine Anordnung und ein Verfahren zum Protokollieren von Benutzungsvorgängen elektronischer Kommunikationsmittel.

In den meisten Firmen und Behörden sind die Arbeitsplätze mit Computern ausgestattet, die in der Regel auch die Möglichkeit des Zugriffs auf das Internet haben. Der Zugriff aufs Internet mithilfe von Computern kann ebenso wie die Benutzung von Telefonen sowohl dienstlich als auch privat geschehen.

Da bei der Benutzung von Telefonen und gegebenenfalls auch bei dem Zugriff aufs Internet gegebenenfalls Kosten entstehen, ist es sinnvoll, die durch private Benutzung entstehenden Kosten zu ermitteln, um eine gewisse Kostenkontrolle durchführen zu können. Es besteht also die Notwendigkeit, Verbindungsdaten aufzuzeichnen. Bei der privaten Benutzung sowohl von Telefonen als auch von Computern dürfen aber nicht alle Daten, die bei der Verbindung entstehen aufgezeichnet werden. Bei einer dienstlichen Benutzung dürfen andere Daten gespeichert werden.

Es besteht sowohl bei privaten als auch bei dienstlichen Gesprächen am Telefon häufig die Möglichkeit, Verbindungen gleichzeitig oder direkt aneinander anschließend sowohl über das Telefon als auch über einen Internetzugriff oder über einen E-Mail Zugriff durchzuführen. Beispielsweise kann man einen Gesprächspartner über einen interessanten Beitrag im Internet telefonisch informieren, oder aber auch mit ihm über den Inhalt eines E-Mails am Telefon diskutieren.

Während Computer, sei es als Arbeitsplatzcomputer oder auch als tragbare Computer, üblicherweise einem Benutzer direkt zugeordnet sind, gilt dies für Telefongeräte nicht.

Es ist bereits ein Verfahren und eine Vorrichtung zur Protokollierung von Kommunikationsdaten bekannt. Dabei wird vor der Benutzung eines bestimmten Kommunikationsgeräts ermittelt, ob dieses Kommunikationsgerät privat oder dienstlich benutzt werden soll (DE 102006038372 A1).

Weiterhin ist eine Anordnung zum Protokollieren und Kontrollieren von Benutzungsvorgängen von Kommunikationsgeräten vorgeschlagen worden, bei der der Benutzer vor dem Benutzen eines speziellen Kommunikationsgeräts die Benutzungsart mithilfe eines Schalters einstellen kann (DE 102008056961 A1).

Der Erfindung liegt die Aufgabe zu Grunde, eine Möglichkeit der Protokollierung von Benutzungsvorgängen mit unterschiedlichen Kommunikationsmitteln zu schaffen, die die gesetzlichen Vorgaben erfüllt und einfacher zu bedienen ist.

Zur Lösung dieser Aufgabe schlägt die Erfindung einer Anordnung mit den im Anspruch 1 genannten Merkmalen vor. Weiterbildungen der Erfindung sind Gegenstand von Unteransprüchen.

Erfindungsgemäß ist also vorgesehen, dass bei der Auswahl der Benutzung eines bestimmten Typs von Kommunikationsmittel diese Auswahl dann auch für die anderen Kommunikationsmittel gilt, solange, bis sie widerrufen wird. Dann kann die Art der Aufzeichnung der Verbindungsdaten nach unterschiedlichen Kriterien erfolgen, die sich beispielsweise aus gesetzlichen Bestimmungen ergeben.

Um in dem eingangs genannten Beispiel zu bleiben, wenn der Benutzer eines Computers die Benutzung als privat deklariert, und anschließend zum Telefonhörer greift, so gilt diese Benutzung des Telefons ebenfalls als privat.

Die unterschiedliche Art der Aufzeichnung von bei der Verbindung entstehenden Daten braucht nicht nur die private und dienstliche Benutzung zu betreffen. Es ist auch möglich, dass ein Mitarbeiter an zwei Projekten arbeitet und die Telefongespräche oder die Benutzung von E-Mail Verkehr dem jeweiligen Projekt zugeordnet werden sollen, für das er gerade arbeitet. Wenn beispielsweise ein Beratungsunternehmen für unterschiedliche Auftraggeber tätig wird, kann es ebenfalls erforderlich sein, Verbindungsdaten für unterschiedliche Projekte nach anderen Kriterien abzuspeichern, um sicherzustellen, dass kein Zugriff von dem einen Projekt auf das andere möglich ist.

Nicht nur in diesem Fall ist es auch denkbar, dass die im Anspruch genannte Aufzeichnung der Benutzungsdaten in unterschiedlicher Weise nur bedeutet, dass sie Benutzungsdaten derart aufgezeichnet werden, dass bei einer späteren Auswertung die Benutzungsdaten je nach Art der Benutzung unterschieden werden können. Es ist also auch möglich, dass die gleichen Benutzungsdaten bei beiden Benutzungsarten abgespeichert werden, dass aber die Auswertung unterschiedlich geschehen kann.

Eine erste von der Erfindung in Weiterbildung vorgeschlagene Möglichkeit, das Aufzeichnungsgerät zur Auswahl der Benutzungsart anzusteuern, kann darin bestehen, dass ein Benutzer an einem Zeiterfassungsterminal eingibt, dass er jetzt eine Arbeitszeitunterbrechung beginnt.

Falls es in einer Behörde oder einem Betrieb eine grundsätzliche Pausenregelung gibt, bei der zu bestimmten Tageszeiten eine Pause genommen werden muss, kann selbstverständlich eine Benutzung eines Telekommunikationsgeräts innerhalb der Pause automatisch als privat verbucht werden.

Eine weitere von der Erfindung vorgeschlagene Möglichkeit besteht darin, dass an dem jeweiligen Kommunikationsgerät ein Schalter vorgesehen ist, den der Benutzer bewusst betätigen kann. Selbstverständlich kann es sich dabei auch um einen Softwareschalter handeln.

Nun gibt es Fälle, in denen ein Benutzer ein Telekommunikationsmittel benutzen will, das nicht an seinem Arbeitsplatz steht. Üblicherweise sind die Arbeitsplatzcomputer dem Benutzer zugeordnet, da er sich dort beim Einschalten mit einem Kürzel meldet. Laptops werden häufig auch in Besprechungen mitgenommen. Wenn nun aber ein Benutzer in einem Raum, der nicht sein Arbeitszimmer ist, an einem fremden Telefon telefonieren will, so ist nicht ohne weiteres erkennbar, dass es sich jetzt um einen speziellen Benutzer handelt. In diesem Fall kann erfindungsgemäß vorgesehen sein, dass dann, wenn ein Kommunikationsgerät einem Benutzer nicht zugeordnet ist oder nicht zugeordnet werden kann, eine Identifizierung des Benutzers erfolgen muss. Dies kann durch Abfrage beziehungsweise Eingabe einer bestimmten Kennung erfolgen.

Erfindungsgemäß kann nicht nur bei Computern, die auf das Internet zugreifen, oder Telefongeräten oder den immer noch vorhandenen Faxgeräten eine solche Zuordnung erfolgen, sondern auch bei der Versendung von E-Mails. Dort kann vorgesehen sein, dass bei einer privaten Benutzung eine private Absenderadresse angegeben wird. Auch hier kann wieder eine Zuordnung zu verschiedenen Projekten möglich sein, falls es sich bei verschiedenen Projekten beispielsweise um verschiedene Auftraggeber handelt.

Weitere Möglichkeiten der Kommunikation mit der Außenwelt, die sowohl privat als auch dienstlich erfolgen können, sind Videokonferenzen, Instant- Messaging, Versenden von SMS, Nutzung sozialer Netze wie Facebook, Xing usw.

Erfindungsgemäß kann in Weiterbildung vorgesehen sein, dass zu bestimmten Zeiten, beispielsweise nachts, die bislang ausgewählten Benutzungsarten bei allen Geräten zurück gesetzt werden. Beim erstmaligen Zugriff an jedem Tag ist also noch keine Benutzungsart eingestellt, sondern der Benutzer muss hier auswählen.

In Weiterbildung der Erfindung kann vorgesehen sein, dass das Aufzeichnungsgerät die aufgezeichneten Daten der unterschiedlichen Benutzungsarten in zwei getrennten Speichern oder zwei getrennten Speicherbereichen aufzeichnet.

Es kann ebenfalls erfindungsgemäß für eine Kontrolle eine Vergleichseinrichtung vorgesehen sein, um festzustellen, ob bestimmte Internetadressen und/oder Telefonnummern und/oder E-Mail-Adressen sowohl in den der privaten Benutzung zugeordneten Benutzungsdaten als auch in den der dienstlichen Benutzung zugeordneten Benutzungsdaten für den gleichen Benutzer auftreten. Dies kann beispielsweise dadurch geschehen, dass der Speicherbereich für die private Benutzung mit dem Speicherbereich für die dienstliche Benutzung verglichen wird. Dadurch wird es möglich, ab und zu Kontrollen durchzuführen, ohne dass die Belange des Datenschutzes beeinträchtigt werden.

Erfindungsgemäß kann vorgesehen sein, dass die Steuereinrichtung zum Ansteuern des Aufzeichnungsgeräts und das Aufzeichnungsgerät selbst innerhalb der die Kommunikationsgeräte enthaltenden örtlichen Einrichtung angeordnet ist, also beispielsweise einem Unternehmen.

Dies gilt insbesondere dann, wenn die Kommunikationsgeräte an eine zentrale Einheit, einen Proxy Server, eine Telefonanlage oder einen E-Mail Server angeschlossen und darüber mit der Außenwelt verbunden sind.

Da es sich bei der Steuereinrichtung und dem Aufzeichnungsgeräts um Computer handelt, ist es selbstverständlich auch denkbar, dass diese IT-Einrichtung zwar dem Unternehmen zugeordnet ist, aber nicht in den Räumen des Unternehmens steht. Die Einrichtung kann beispielsweise bei einem Provider stehen, aber ausschließlich dem Unternehmen zugeordnet sein.

Erfindungsgemäß können auch der Proxy- Server und/oder die Telefonanlage und/oder der E-Mail- Server beim Provider stehen.

Es ist aber auch möglich, dass die Steuereinrichtung einem Provider zugeordnet ist, der alle Vorgänge eines Unternehmens, also eines Kunden, getrennt von allen Vorgängen eines anderen Kunden verwaltet.

Diese Möglichkeit ist dann von Interesse, wenn zu den Kommunikationsgeräten auch Mobiltelefone gehören, die direkt bei einem Provider verwaltet werden. Dies gilt auch für sonstige mobile Geräte, beispielsweise Notebooks, mit deren Hilfe sich ein Mitarbeiter von außerhalb des Unternehmens direkt in einen E-Mail Account bei einem Provider einwählt.

Erfindungsgemäß kann vorgesehen sein, dass sämtliche Steuerungsvorgänge von dem Provider verwaltet werden.

Erfindungsgemäß kann in einem solchen Fall bei dem Provider eine Steuerungslogik vorhanden sein, die die kundenspezifischen Ansprüche und Vorgaben für die private Nutzung der Kommunikationsmittel am Arbeitsplatz steuert. Zur Identifizierung der einzelnen Mitarbeiter für die verschiedenen Arten der Kommunikation können Einrichtungen vorgesehen sein.

In einer Datenbank werden die einzelnen Mitarbeiter eines Unternehmens erfasst. Damit die verschiedenen Kommunikationsarten eindeutig einen Benutzer des Kommunikationsgeräts zugeordnet werden können, stehen dort Kennzeichen zur Verfügung, um den Benutzer zu identifizieren. Dies kann beispielsweise die Signatur oder ein Loginname sein, eine Mobilfunknummer oder eine PIN- Nummer für die Benutzung des Telefons, eine E-Mail-Adresse oder sonstige Login- Informationen von sozialen Netzwerken.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: schematisch eine Übersicht über eine von der Erfindung vorgeschlagene Anordnung;
- Figur 2: ebenfalls schematisch eine Übersicht über eine von der Erfindung vorgeschlagene Anordnung nach einem zweiten Ausführungsbeispiel.

Es ist ein Proxy-Server 8 vorhanden, an den eine Vielzahl von PCs 7, von denen nur einer dargestellt ist, über jeweils eine Verbindungsleitung 12 angeschlossen ist. Die Verbindung ist als Leitung dargestellt, obwohl es sich natürlich auch um eine drahtlose Vernetzung handeln kann. Von dem Proxy Server 8, über den die Verbindung mit der Außenwelt geschieht, führt eine Leitung 9 durch eine nicht dargestellte Firewall ins Internet. Die PCs 7 der Anordnung sind über eine zweite Leitung 11 direkt mit einer Steuereinrichtung 6 der Anordnung verbunden. Diese Verbindung kann auch über die Leitung 12 zum Proxy Server 8 und von dort über die Leitung 10 zu der Steuereinrichtung 6 erfolgen. Aus Gründen der vereinfachten Darstellung wird diese eigene Leitung 11 aber dargestellt.

Wie bereits erwähnt ist auch der Proxy Server 8 über eine Leitung 10 mit der Steuereinrichtung 6 der Anordnung verbunden.

Mit der Steuereinrichtung 6 der Anordnung ist dann noch über eine weitere Leitung 14 das Zeiterfassungssystem 15 verbunden.

Die Steuereinrichtung 6 der Anordnung steuert Eingabevorgänge in ein und gegebenenfalls auch Ausgabevorgänge aus einem Aufzeichnungsgerät 16, beispielsweise einem weiteren Server 16.

Mit diesem Aufzeichnungsgerät 16 direkt oder über die Steuereinrichtung 6 verbunden ist ein Gerät 20, mit dessen Hilfe ein Zugriff auf die in dem Aufzeichnungsgerät 16 gespeicherten Verbindungsdaten möglich ist. Dies geschieht über eine abgesicherte Schnittstelle. Angedeutet ist die nur verschlüsselte Zugriffsmöglichkeit auf das Gerät 20 durch einen schematisch dargestellten Schlüssel 21.

Zu der Anordnung gehört noch eine Telefonanlage 1, mit der über Leitungen 3 eine Vielzahl von Telefongeräten 2 verbunden ist. Auch die Telefonanlage 1 ist über eine Leitung 5 mit der Steuereinrichtung 6 der Anordnung verbunden. Dies bedeutet, dass auch Verbindungsdaten der Telefonanlage von der Steuereinrichtung 6 verarbeitet werden können.

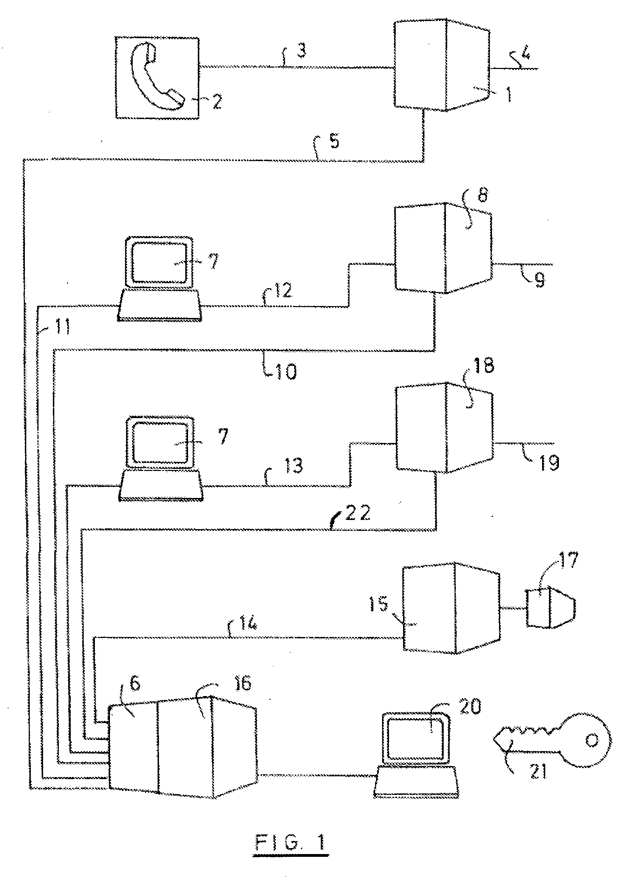

In der schematischen Darstellung der Figur 1 ist von einer Telefonanlage 1 die Rede. Die Erfindung findet aber auch Anwendung in den Fällen, in denen die Telefone als Softphones im PC integriert sind.

Weiterhin gehört zu der als Ausführungsform dargestellten Anordnung ein E-Mail Server 18, der über eine Leitung 19 mit der Außenwelt verbunden ist. An dem E-Mail Server 18 sind über entsprechende Leitungen 13 die gleichen PCs 7 angeschlossen, die auch schon an dem Proxy Server 8 angeschlossen sind. Sie werden hier der Einfachheit halber nochmals getrennt dargestellt. Auch der E-Mail Server 18 ist über eine Leitung 22 mit der Steuereinrichtung 6 der Anordnung verbunden.

Wenn die Anordnung beispielsweise nachts zurück gesetzt wird, erfolgt ein erstmaliger Benutzungsvorgang eines Benutzers in der folgenden Weise. Je nachdem, welches Gerät der Benutzer benutzen möchte, gibt er an diesem Gerät an, ob er das Gerät privat oder dienstlich benutzen will. Diese Auswahl kann er an dem Gerät selbst machen. Wenn er die Benutzung dieses Geräts beendet, oder ohne die Benutzung zu beenden ein zweites Telekommunikationsgerät benutzt, so ist dort automatisch die gleiche Art der Benutzung eingestellt.

Angenommen, der Benutzer möchte zunächst ein Telefongespräch führen. Er kann sich durch Betätigung einer speziellen Ziffer auf dem Ziffernblock des Telefongeräts anmelden. Dies ist dann möglich, wenn ein Telefonapparat genau einem Mitarbeiter zugeordnet ist. Als zusätzliche Sicherheit kann jedem Mitarbeiter eine PIN Nummer zugeordnet werden, die vor einem Privatgespräch eingegeben werden muss. Somit ist der Mitarbeiter entweder durch die Nebenstelle oder die PIN identifiziert. Da jedem Mitarbeiter zudem ein PC Anmeldenamen und eine E-Mail Adresse vergeben wird, ist eine eindeutige Zuordnung möglich.

Beispielsweise führt die Betätigung der "Privat" Taste am Telefon zu einer Sprachverbindung mit einem speziell vorgesehenen Telefonserver nur für private Gespräche. Dieser Server spielt dem Anrufer einen Text ein, in dem er aufgefordert wird, seine PIN Nummer einzugeben. Diese kann der Benutzer über die Tastatur des Telefons eingeben. Denkbar ist auch, dass die PIN Nummer gesprochen und über eine Spracherkennung erkannt wird. Außerdem ist natürlich die Erkennung eines Benutzers über ein Stimmspektrogramm möglich.

Danach ist der Benutzer identifiziert. Es kann nun geprüft werden, ob dem Benutzer noch private Benutzungszeit zur Verfügung steht. Es kann ebenfalls die jetzt beginnende Sprechzeit als Pause in dem Arbeitszeiterfassungssystem vermerkt werden. Falls dem Benutzer noch ausreichend Zeit zur Verfügung steht, wird an die anderen Server die Mitteilung verschickt, dass alle zukünftigen Zugriffe privat sind.

Der Benutzer kann aber die Kommunikation auch an einem anderen Gerät beginnen. Auch in diesem Fall erfolgen ähnliche Prüfungen, und es wird dafür gesorgt, dass alle zukünftigen Benutzungen als privat gelten, bis er diesen Zustand aufhebt.

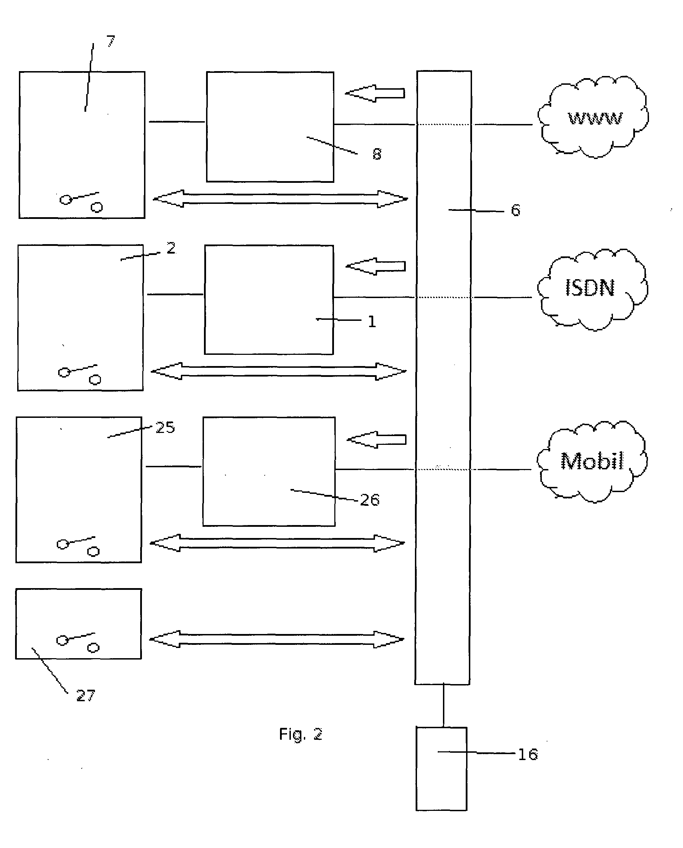

Die Figur 2 zeigt eine Anordnung, bei der die Kommunikationsgeräte nicht direkt mit der Steuerungslogik 6 und dem Aufzeichnungsgerät 16 verbunden sind, sondern eine Verbindung über externe Netze erfolgt, beispielsweise das Internet oder das GSM.

Eine Vielzahl von Computern, von denen nur ein Computer 7 dargestellt ist, ist über Vorrichtung 8, die den jeweiligen Benutzer identifizieren kann, also zum Beispiel einen Proxy- Server, mit dem Internet WWW verbunden.

Eine Vielzahl von Festnetztelefonen, von denen ebenfalls nur ein Telefon 2 dargestellt ist, ist über eine Vorrichtung, die den jeweiligen Benutzer identifizieren kann, also zum Beispiel eine Telefonanlage 1, mit dem ISDN Netz verbunden.

Eine Vielzahl von mobilen Kommunikationsgeräten 25 ist über eine Vorrichtung 26, die den jeweiligen Benutzer identifizieren kann, also zum Beispiel einen Provider, mit dem Mobilfunknetz verbunden.

Außerdem gibt es einen zusätzlichen Schalter 27, der nicht direkt an einem Kommunikationsgerät angeordnet bzw. angebracht ist.

Weiterhin ist die schon bei der vorherigen Ausführungsform vorhandenen Steuereinrichtung 6 vorhanden, die mit dem Internet, dem ISDN Netz und dem Mobilfunknetz verbunden ist und logisch auch mit den Proxy Server 6, der Telefonanlage 1 und dem Mobilfunk Provider 26. Die Verbindung zwischen den einzelnen Kommunikationsgeräten 7, 2, 25 und der Steuereinrichtung 6 geschieht jetzt nicht mehr direkt, sondern über das Internet, das ISDN Netz und das Mobilfunknetz.

Der Ablauf ist der gleiche, wie dies bei der vorhergehenden Ausführungsform beschrieben wurde. Ein Benutzer, der mit einem Kommunikationsgerät eine Verbindung mit dem entsprechenden Netz aufbaut, entscheidet beim Aufbau der Verbindung, ob die Benutzung privat oder dienstlich ist. Die Steuereinheit 6 sorgt nun dafür, dass zum einen die Daten entsprechend der ausgewählten Benutzungsart aufgezeichnet bzw. ausgewertet werden, und schaltet die übrigen dem Benutzer zugeordneten Kommunikationsgeräte in die gleiche Benutzungsart. Dies kann den Benutzern an den verschiedenen Kommunikationsgeräten angezeigt werden. Diese Benutzungsart bleibt eingestellt, bis bewusst eine Änderung von dem Benutzer vorgenommen wird. Die Identifizierung des sich gerade eintragenden Benutzers geschieht bei einem PC durch die üblicherweise vorgesehene Identifizierung durch Eingabe eines Passworts oder durch die Abfrage biometrischer Daten. Die diesem Benutzer zugeordneten Kommunikationsgeräte werden dann ebenfalls identifiziert, bei einem mobilen Telefongerät beispielsweise durch die Telefonnummer, bei dem E-Mail Zugriff durch die E-Mail-Adresse usw. Bei einem Festnetztelefon, das üblicherweise nicht einem bestimmten Benutzer zugeordnet ist, kann beim Abheben des Hörers eine Identifikation verlangt werden.

## Patentansprüche

1. Anordnung zum Protokollieren von Benutzungsvorgängen, mit
1.1 mindestens zwei auf externe Kommunikationsnetze zugreifenden Kommunikationsgeräten (7, 2, 25), die
1.1.1 jeweils auf mindestens zwei verschiedene Arten benutzt werden können,
1.2 einem Aufzeichnungsgerät (16), das
1.2.1 zur Aufzeichnung der Benutzungsdaten der unterschiedlichen Benutzungsarten in unterschiedlicher bzw. unterscheidbarer Weise ausgebildet ist,
1.3 einer Steuereinrichtung (6) zum Ansteuern des Aufzeichnungsgeräts (16), die
1.3.1 je nach Benutzungsart die zugehörige Aufzeichnungsart für alle Kommunikationsgeräte (7, 2, 25) des gleichen Benutzers auslöst und diese Auswahl bis zu ihrem Widerruf beibehält, sowie mit
1.4 einer Abfrageschnittstelle für das Aufzeichnungsgerät, die
1.4.1 einen Zugriff auf die aufgezeichneten Daten der mindestens zwei Benutzungsarten ggf. nach unterschiedlichen Kriterien ermöglicht.

2. Anordnung nach Anspruch 1, bei der die Steuereinrichtung (6) derart ausgebildet ist, dass sie zur Ermittlung der Art der Benutzung den Zustand eines Arbeitszeiterfassungssystems für den jeweiligen Benutzer des Kommunikationsgerätes (7, 2, 25) abfragt.

3. Anordnung nach Anspruch 1 oder 2, mit jeweils einem jedem Kommunikationsgerät (7, 2, 25) zugeordneten von dem Benutzer bewusst betätigbaren Auswahlschalter zur Auswahl der Benutzungsart.

4. Anordnung nach einem der vorhergehenden Ansprüche, bei der mindestens ein Kommunikationsgerät (7,2,25) ein Telefon ist.

5. Anordnung nach einem der vorhergehenden Ansprüche, bei der mindestens ein Kommunikationsgerät (7, 2, 25) ein auf das Internet zugreifender PC ist.

6. Anordnung nach einem der vorhergehenden Ansprüche, bei der mindestens ein Kommunikationsgerät (7, 2, 25) ein E-Mail Gerät ist.

7. Anordnung nach einem der vorhergehenden Ansprüche, bei der die Steuereinrichtung (6) derart ausgebildet ist, dass bei einem dem Benutzer nicht zugeordneten beziehungsweise nicht zuzuordnenden Kommunikationsgerät (7, 2, 25) eine Identifizierung des Benutzers erfolgt.

8. Anordnung nach einem der vorhergehenden Ansprüche, bei der die Steuereinrichtung (6) derart ausgebildet ist, dass eine Auswahl der Benutzungsart vor Aufnahme der Benutzung erfolgen muss.

9. Anordnung nach einem der vorhergehenden Ansprüche, bei der das Aufzeichnungsgerät (16) derart ausgebildet ist, dass es die Benutzungsdaten der unterschiedlichen Benutzungsarten in getrennte Speicher oder getrennte Speicherbereiche aufzeichnet.

10. Anordnung nach einem der vorhergehenden Ansprüche, mit einer Vergleichseinrichtung zum Vergleich des Auftretens von identischen Benutzungsdaten in beiden Speichern beziehungsweise Speicherbereichen.

11. Verfahren zum Protokollieren von in unterschiedlichen Benutzungsarten mit unterschiedlichen Kommunikationsgeräten (7, 2, 25) möglichen Benutzungsvorgängen, mit folgenden Verfahrensschritten:
11.1 es wird eine der mehreren möglichen Benutzungsarten ausgewählt,
11.2 die ausgewählte Benutzungsart gilt für alle späteren Benutzungsvorgänge des gleichen Benutzers auch mit den anderen Kommunikationsgeräten,
11.3 in Abhängigkeit von der ausgewählten Benutzungsart werden Benutzungsdaten in unterschiedlicher Weise abgespeichert,
11.4 bei Wechsel der Benutzungsart erfolgt eine zusätzliche Eingabe der Benutzungsart.

12. Verfahren nach Anspruch 11, bei dem in Abhängigkeit von der ausgewählten Benutzungsart die Benutzungsdaten in unterschiedlichen Speichern beziehungsweise Speicherbereichen abgespeichert werden.

13. Verfahren nach Anspruch 11 oder 12, bei dem mindestens stichprobenweise die abgespeicherten Benutzungsdaten der mindestens zwei unterschiedlichen Benutzungsarten auf Übereinstimmung in den einem Benutzer zugeordneten Benutzungsdaten überprüft werden.

## Claims

1. Arrangement for logging use processes, having
1.1 at least two communication appliances (7, 2, 25) accessing external communication networks,
1.1.1 each appliance adapted to be used in at least two different modes,
1.2 a recording apparatus (16) which
1.2.1 for recording use data of the different utilization modes is configured in different and distinguishable ways,
1.3 a control device (6) for controlling the recording apparatus (16), which control device,
1.3.1 depending on the utilization mode, initiates the respective recording mode for all communication appliances (7, 2, 25) of the same user and maintains this selection until cancelled, and having
1.4 a query interface for the recording apparatus, which interface
1.4.1 allows access to the recorded data of the at least two utilization modes and, as the case may be, according to different criteria.

2. Arrangement according to claim 1, wherein the control device (6) is configured such that, for determining the mode of utilization, the condition of a working time recording system is scanned in relation to the respective user of the communication appliance (7, 2, 25).

3. Arrangement according to claim 1 or 2, with a respective selection button for selecting the utilization mode assigned to each communication appliance (7, 2, 25) and to be operated by the user deliberately.

4. Arrangement according to any one of the preceding claims, wherein at least one communication appliance (7, 2, 25) is a telephone.

5. Arrangement according to any one of the preceding claims, wherein at least one communication appliance (7, 2, 25) is a PC accessing the Internet.

6. Arrangement according to any one of the preceding claims, wherein at least one communication appliance (7, 2, 25) is an e-mail apparatus.

7. Arrangement according to any one of the preceding claims, wherein the control device (6) is configured such that identifying of the user is performed in case of a communication appliance (7, 2, 25) not assigned or not assignable to the user.

8. Arrangement according to any one of the preceding claims, wherein the control device (6) is configured such that selection of the utilization mode is mandatory prior to starting utilization.

9. Arrangement according to any one of the preceding claims, wherein the recording apparatus (16) is configured such that it records use data of different utilization modes in separate memories or separate memory areas.

10. Arrangement according to any one of the preceding claims, including a comparator device for comparing the occurrence of identical use data in both memories or memory areas.

11. Method for logging potential use processes in different utilization modes using different communication appliances (7, 2, 25), comprising the following method steps:
11.1 selecting one of a plurality of potential utilization modes,
11.2 the selected utilization mode being valid for all later use processes of the same user even when using other communication appliances,
11.3 storing use data in different ways in response to the selected utilization mode,
11.4 additional entry of the utilization mode in case of a change of the utilization mode.

12. Method according to claim 11, wherein, in response to the selected utilization mode, the use data are stored in different memories or memory areas.

13. Method according to claim 11 or 12, wherein the stored use data of the at least two different utilization modes are checked for consistency with the use data assigned to a user, at least in random testing.

## Revendications

1. Arrangement servant à journaliser des opérations d'utilisation comprenant
1.1 au moins deux appareils de communication (7, 2, 25) accédant à des réseaux de communication externes, lesquels
1.1.1 peuvent respectivement être utilisés dans au moins deux modes différents,
1.2 un appareil d'enregistrement (16) qui
1.2.1 est configuré pour l'enregistrement des données d'utilisation des différents modes d'utilisation de manières différentes ou différentiables,
1.3 un dispositif de commande (6) destiné à commander l'appareil d'enregistrement (16), lequel,
1.3.1 suivant le mode d'utilisation, déclenche le mode d'enregistrement associé pour tous les appareils de communication (7, 2, 25) du même utilisateur et conserve cette sélection jusqu'à sa révocation, et comprenant aussi
1.4 une interface d'interrogation pour l'appareil d'enregistrement, laquelle
1.4.1 permet un accès aux données enregistrées des au moins deux modes d'utilisation, le cas échéant d'après des critères différents.

2. Arrangement selon la revendication 1, avec lequel le dispositif de commande (6) est configuré de telle sorte que pour déterminer le mode d'utilisation, il interroge l'état d'un système d'acquisition du temps de travail pour l'utilisateur correspondant de l'appareil de communication (7, 2, 25).

3. Arrangement selon la revendication 1 ou 2, comprenant un commutateur de sélection associé respectivement à chaque appareil de communication (7, 2, 25) et actionnable volontairement par l'utilisateur pour sélectionner le mode d'utilisation.

4. Arrangement selon l'une des revendications précédentes, avec lequel l'au moins un appareil de communication (7, 2, 25) est un téléphone.

5. Arrangement selon l'une des revendications précédentes, avec lequel l'au moins un appareil de communication (7, 2, 25) est un PC accédant à l'Internet.

6. Arrangement selon l'une des revendications précédentes, avec lequel l'au moins un appareil de communication (7, 2, 25) est un appareil de messagerie électronique.

7. Arrangement selon l'une des revendications précédentes, avec lequel le dispositif de commande (6) est configuré de telle sorte qu'une identification de l'utilisateur a lieu en présence d'un appareil de communication (7, 2, 25) non associé ou ne devant pas être associé à l'utilisateur.

8. Arrangement selon l'une des revendications précédentes, avec lequel le dispositif de commande (6) est configuré de telle sorte qu'une sélection du mode d'utilisation doit avoir lieu avant l'admission de l'utilisation.

9. Arrangement selon l'une des revendications précédentes, avec lequel l'appareil d'enregistrement (16) est configuré de telle sorte qu'il enregistre les données d'utilisation des différents modes d'utilisation dans des mémoires séparées ou des zones de mémoire séparées.

10. Arrangement selon l'une des revendications précédentes, comprenant un dispositif comparateur destiné à comparer la survenance de données d'utilisation identiques dans les deux mémoires ou zones de mémoire.

11. Procédé de journalisation d'opérations d'utilisation possibles dans différents modes d'utilisation avec des appareils de communication (7, 2, 25) différents, comprenant les étapes de procédé suivantes :
11.1 l'un des plusieurs modes d'utilisation possibles est sélectionné,
11.2 le mode d'utilisation sélectionné s'applique à toutes les opérations d'utilisation ultérieures du même utilisateur, même avec les autres appareils de communication,
11.3 les données d'utilisation sont mises en mémoire de différentes manières, suivant le mode d'utilisation sélectionné,
11.4 une saisie supplémentaire du mode d'utilisation a lieu en cas de changement de mode d'utilisation.

12. Procédé selon la revendication 11, selon lequel les données d'utilisation sont mises en mémoire dans des mémoires différentes ou des zones de mémoire différentes, en fonction du mode d'utilisation sélectionné.

13. Procédé selon la revendication 11 ou 12, selon lequel les données d'utilisation mises en mémoire des au moins deux modes d'utilisation différents sont soumises à un contrôle de concordance, au moins par échantillonnage, avec les données d'utilisation associées à un utilisateur.
